(19) **Europäisches Patentamt**

**European Patent Office**

**Office européen des brevets**

(11) **EP 0 895 688 B1**

(12) **EUROPEAN PATENT SPECIFICATION**

(45) Date of publication and mention
of the grant of the patent:
**15.02.2006 Bulletin 2006/07**

(51) Int Cl.:
*H04M 9/00* *(2006.01)*    *H04M 11/00* *(2006.01)*
*H04B 3/20* *(2006.01)*    *H04M 9/08* *(2006.01)*
*H04B 3/23* *(2006.01)*

(21) Application number: **97950580.7**

(22) Date of filing: **04.11.1997**

(86) International application number:
**PCT/US1997/020079**

(87) International publication number:
**WO 1998/033311 (30.07.1998 Gazette 1998/30)**

(54) **APPARATUS AND METHOD FOR NON-LINEAR PROCESSING IN A COMMUNICATION SYSTEM**

GERÄT UND VERFAHREN FÜR NICHTLINEARE VERARBEITUNG IN EINEM
KOMMUNIKATIONSSYSTEM

APPAREIL ET PROCEDE POUR LE TRAITEMENT NON LINEAIRE DANS UN SYSTEME DE
COMMUNICATION

(84) Designated Contracting States:
**DE FI FR GB IT SE**

(30) Priority: **23.01.1997 US 788061**

(43) Date of publication of application:
**10.02.1999 Bulletin 1999/06**

(73) Proprietor: **MOTOROLA, INC.**
**Schaumburg, IL 60196 (US)**

(72) Inventors:
• **ASHLEY, James, P.**
**Naperville, IL 60565 (US)**
• **PROCTOR, Lee, M.**
**Cary, IL 60013 (US)**

(74) Representative: **Openshaw, Paul Malcolm et al**
**Openshaw & Co.**
**Town Hall Exchange**
**The Town Hall Buildings**
**Castle Street**
**Farnham, Surrey GU9 7ND (GB)**

(56) References cited:
**EP-A- 0 739 123**      **GB-A- 2 245 459**
**US-A- 4 783 803**      **US-A- 4 811 404**
**US-A- 5 295 136**      **US-A- 5 305 309**
**US-A- 5 307 405**      **US-A- 5 343 521**
**US-A- 5 414 796**      **US-A- 5 535 194**
**US-A- 5 613 037**

**Description**

FIELD OF THE INVENTION

The present invention relates generally to echo cancellation and, more particularly, to improved non-linear processing in communication systems.

BACKGROUND OF THE INVENTION

Recent speech compression standards for digital cellular systems have considered noise suppression to be a necessary component of the signal pre-processing function. Although the methods for noise suppression remain optional within these standards, it is nearly impossible to pass the subjective compliance test if no noise suppression is used. While these standards have addressed the need for the noise suppression function, they have not addressed the impact of cascading the noise suppression with other necessary pre-processing functions, such as echo cancellation. Cascading an echo canceller with a noise suppressor can lead to problems.

It is well known that when canceling electrical and acoustic echoes in communications systems, certain non-linearities in the echo path (e.g., quantization noise, acoustic variance, etc.) prevent the echo generating system from being completely and accurately modeled by the echo canceller. This results in a residual echo that can be audible to the end user. In order to compensate for this imperfection, echo cancellation systems employ what is commonly known as a "center clipper" or a "non-linear processor" (see CCITT recommendation G.165, Geneva, 1980 amended at Malaga-Torremolinos, 1984 and at Melbourne, 1988). The non-linear processor basically suppresses the residual by estimating the echo return loss (ERL) and echo return loss enhancement (ERLE), and "clipping" the residual once a minimum ERL + ERLE threshold is achieved. The clipping is typically a switch to a low level "comfort noise" generator, which provides the feeling of a live circuit to the end user.

The problem is that these new noise suppression systems are not compatible with this well known non-linear process. Simply stated, these new noise suppression systems use the long-term statistics of the incoming signal to periodically estimate the background noise spectral magnitude. This estimate is then used as a frequency domain filter to attenuate frequency bands of the incoming signal that are sufficiently close in magnitude to the noise estimate. If an echo canceller precedes the noise suppression system, the non-linear processor will incorrectly bias the estimate of the background noise. This will result in an invalid filtering operation once the non-linear processor goes inactive because the background noise characteristic has changed. In moderate to high noise environments, such as a hands-free configuration of a cellular radiotelephone, this renders the noise suppression system useless.

Other configurations have also been considered. For example, if the noise suppression system was placed in front of the echo canceller, then the non-linear process within the echo canceller would not affect the noise estimate in the noise suppression system. The problem with this implementation is that the highly non-linear noise suppressor is now in the echo path, which would prevent the echo canceller from ever converging properly. Another example involves separating the non-linear processor from the echo canceller, and correctly placing the echo canceller in front of the noise suppression system, and positioning the non-linear processor behind the noise suppression system (on the noise suppressor output). While this is the best implementation discussed thus far, there are two underlying difficulties. First, the comfort noise generator typically has a fixed spectral characteristic which results in a noise switching artifact that is commonly observed on most long-distance landline phone calls. Second, the non-linear processor can cause problems in determining the packet rate for variable rate vocoders. Most rate determination algorithms use the energy and spectral characteristics of the incoming speech signal to determine voice activity. As such, switching in and out synthesized comfort noise can severely degrade the performance of the rate determination algorithms.

Thus, a need exists for an improved echo cancellation and noise suppression cascade for use in communication systems.

BRIEF DESCRIPTION OF THE DRAWINGS

FIG. 1 generally depicts a communication system which beneficially implements improved non-linear processing in accordance with the invention.
FIG. 2 generally depicts a prior art echo cancellation scheme typically used in communication systems such as the communication system of FIG. 1.
FIG. 3 generally depicts an energy versus time diagram useful in further explaining the prior art configuration of FIG. 2.
FIG. 4 generally depicts improved non-linear processing for use in a communication system in accordance with the invention.

FIG. 5 generally depicts a block diagram of the noise suppression system of FIG. 4 in accordance with the invention.

FIG. 6 generally depicts frame-to-frame overlap which occurs in the noise suppression system of FIG. 5.

FIG. 7 generally depicts trapezoidal windowing of preemphasized samples which occurs in the noise suppression system of FIG. 5.

FIG. 8 generally depicts a block diagram of the spectral deviation estimator within the noise suppression system depicted in FIG. 5.

FIG. 9 generally depicts a flow diagram of the steps performed in the update decision determiner within the noise suppression system depicted in FIG. 5.

FIG. 10. generally depicts an energy versus time diagram which results from implementing improved non-linear processing in accordance with the invention.

FIG. 11 generally depicts a mobile station implementing non-linear processing in accordance with the invention

## DETAILED DESCRIPTION OF A PREFERRED EMBODIMENT

Generally stated, an improved non-linear processor eliminates a comfort noise source and instead inputs a control signal directly into a noise suppression system. The noise suppression system uses the control signal to inhibit the iterative update of the background noise estimate when the control signal is active, which prevents any residual echo from biasing the noise estimate provided by the noise suppression system. Additionally, the control signal is used by a gain calculator within the noise suppression system to attenuate each frequency band to the maximum allowable amount plus the current residual channel signal-to-noise ratio (SNR). Depending on the implementation, the noise suppression system models the background noise of either a user of the PSTN or a user of a mobile station.

Stated more specifically, an apparatus for non-linear processing in a communication system in accordance with the invention comprises a means for analyzing an echo canceler reference signal and an echo canceler residual signal to produce a control signal and a means for modeling background noise of a user based on the control signal. In the preferred embodiment, the means for analyzing comprises a comparitor for comparing the echo canceler reference signal to the echo canceler residual signal to produce the control signal. Also in the preferred embodiment, the user can be a user within a public switched telephone network (PSTN) or a user of a mobile station.

The means for modeling background noise of a user further comprises a noise suppression system which comprises means for inhibiting an update of the background noise based on the control signal. The noise suppression system implements channel gains to perform frequency domain filtering of an input signal and also modifies the channel gains based on the control signal. In the preferred embodiment, the channel gains are modified using the equation $\gamma_{dB}(i)=\gamma_n-\sigma(i)$, $0\leq i<N_c$ when the control signal is active. In this implementation, the noise suppression system spectrally shapes the echo canceler residual signal, in response to the control signal, to sound substantially similar to the modeled background noise produced by the noise suppression system.

In an alternate embodiment, the means for modeling background noise of a user comprises means for filtering the echo canceler residual signal. From an system integration and/or implementation standpoint, the means for analyzing the echo canceler reference signal and the echo canceler residual signal to produce the control signal can be physically separated from the means for modeling background noise or can be co-located with the means for modeling background noise. The apparatus has associated with it a corresponding method comprising the steps of analyzing an echo canceler reference signal and an echo canceler residual signal to produce a control signal and modeling background noise of a user based on the control signal.

Stated differently, the apparatus for non-linear processing in a communication system in accordance with the invention comprises a means for activating a control signal coupled to a noise suppression system. The noise suppression system includes a means for generating a conditioned control signal from the control signal, a means for inhibiting an update of a background noise estimate based on the conditioned control signal and a means for modifying a channel gain based on the conditioned control signal. In this implementation, the means for activating the control signal comprises either a means for comparing the difference between an echo canceler reference signal and an echo canceler residual signal to a threshold or a mute function activated by a user. The mute function activated by a user has particular application to scenarios where it is beneficial to filter a signal while leaving the background noise. One such situation occurs in satellite link transmissions (especially overseas calls) where background noise is desirable to let the user of the communication device know that the link remains connected.

The analysis of the echo canceler reference signal and the echo canceler residual signal to produce the control signal can be performed by an echo canceller, while the modeling of the background noise of a user based on the control signal can be performed by a noise suppression system. When implemented in this fashion, the echo canceller can be physically separated from the noise suppression system or can be co-located with the noise suppression system. Important to note is that the implementation of an echo canceller which is separate from the noise suppression system requires the echo canceller to provide the control signal as an output.

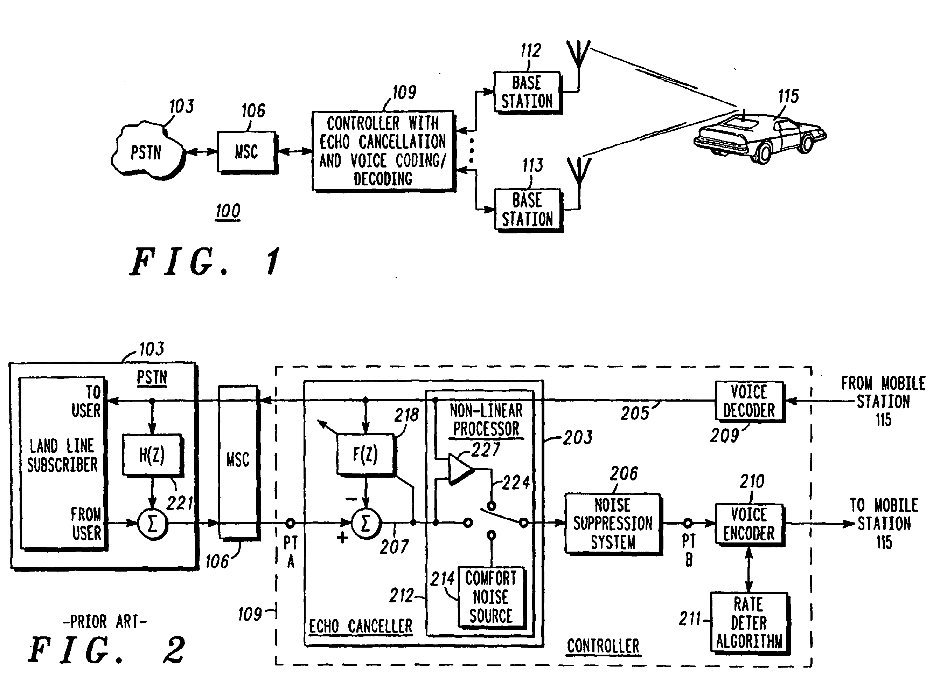

FIG. 1 generally depicts a communication system which beneficially implements improved non-linear processing in accordance with the invention. In the embodiment depicted in FIG. 1, the communication system is a code-division multiple access (CDMA) radiotelephone system, but as one of ordinary skill in the art will appreciate, various other types of communication systems which implement echo cancellation and/or noise suppression systems may beneficially employ the present invention. Continuing, a public switched telephone network 103 (PSTN) is coupled to a mobile switching center 106 (MSC). As is well known in the art, the PSTN 103 provides wireline switching capability while the MSC 106 provides switching capability related to the CDMA radiotelephone system. Also coupled to the MSC 106 is a controller 109, the controller 109 including echo cancellation and voice coding/decoding. The controller 109 controls the routing of signals to/from base-stations 112, 113, which in turn are capable of communicating to a mobile station 115. The CDMA radiotelephone system is compatible with Interim Standard (IS) 95-A. For more information on IS-95-A, see TIA/EIA/IS-95-A, *Mobile Station-Base Station Compatibility Standard for Dual Mode Wideband Spread Spectrum Cellular System,* July 1993. While the switching capability of the MSC 106 and the control capability of the controller 109 are shown as distributed in FIG. 1, one of ordinary skill in the art will appreciate that the two functions could be combined in a common physical entity for system implementation.

To explain improved non-linear processing in accordance with the invention, an explanation of a prior art echo cancellation scheme is beneficial. FIG. 2 generally depicts a prior art echo cancellation scheme typically used in communication systems such as the communication system 100 of FIG. 1, and as typified by EP-A-0739123 (NEC). As shown in FIG. 2, a signal from the mobile station 115 enters a voice decoder block 209 within the controller 109. The voice decoder block is well known in the art, and essentially decodes the "encoded" voice which was encoded at the mobile station 115. The output of the voice decoder 209, which is the echo canceler reference signal 205, enters an echo canceler 203 whose operation will be generally described below. The echo canceler reference signal 205 essentially passes through to the MSC 106 unaffected and eventually arrives at the PSTN 103 where it is sent to a user of the PSTN 103, typically labeled a landline subscriber. As is well known in the art, within the PSTN 103, an echo is generated between the inter-coupling associated with the transmission lines entering and exiting the PSTN 103. That echo is represented by the transfer function H(z) shown in block 221. As such, the signal shown exiting the PSTN 103 and entering the MSC 106 includes, not only a pure signal from the user of the landline system, but an echo of the signal which originated from the mobile station 115 as explained above. That signal passes through the MSC 106 and again enters the echo canceler 203 within the controller 109. The echo canceler 203 subtracts an estimated echo replica from the input to produce the echo canceler residual signal 207. The echo canceler 203 includes a non-linear processor 212 which further suppresses the echo canceler residual signal 207 based on the status of the control signal 224.

As shown in FIG. 2, the non-linear processing is performed by switching to a low level comfort noise source 214 which provides the feeling of a live circuit to the end user. Important to note is that the comfort noise source 214 merely provides low-level white noise, and is not at all related to the user of either the PSTN or a mobile station. Such an echo canceler 203 is well known in the art, an example of which is described in an application note titled "Digital Signal Processing Applications with the TMS 320 Family" published by Texas Instruments in the United States in 1986, from pages 417-436. Another example of echo canceler 203 is provided in United States Patent No. 5,295,136 to Ashley et al. titled "Method of Performing Convergence in a Least Mean Square Adaptive Filter Echo Canceller" assigned to the assignee of the present invention. The echo canceller described in this patent is compliant with the above-cited CCITT recommendation G.165.

The signal exiting the echo canceler 203, and specifically the non-linear processor 212 of the echo canceler 203, enters a noise suppression system 206. Typically, the noise suppression system 206 is that described in § 4.1.2 of TIA document IS-127 titled *"Enhanced Variable Rate Codec, Speech Service Option 3 for Wideband Spread Spectrum Digital Systems"* dated 9 September 1996. The signal exiting the noise suppression system 206 enters a voice encoder 210, which is well known in the art, which encodes the noise suppressed signal for transfer to the mobile station 115 via a base station 112, 113. Also shown in FIG. 2 is a rate determination algorithm 211, which uses the energy and spectral characteristics of the speech signal entering the voice coder 210 to determine voice activity.

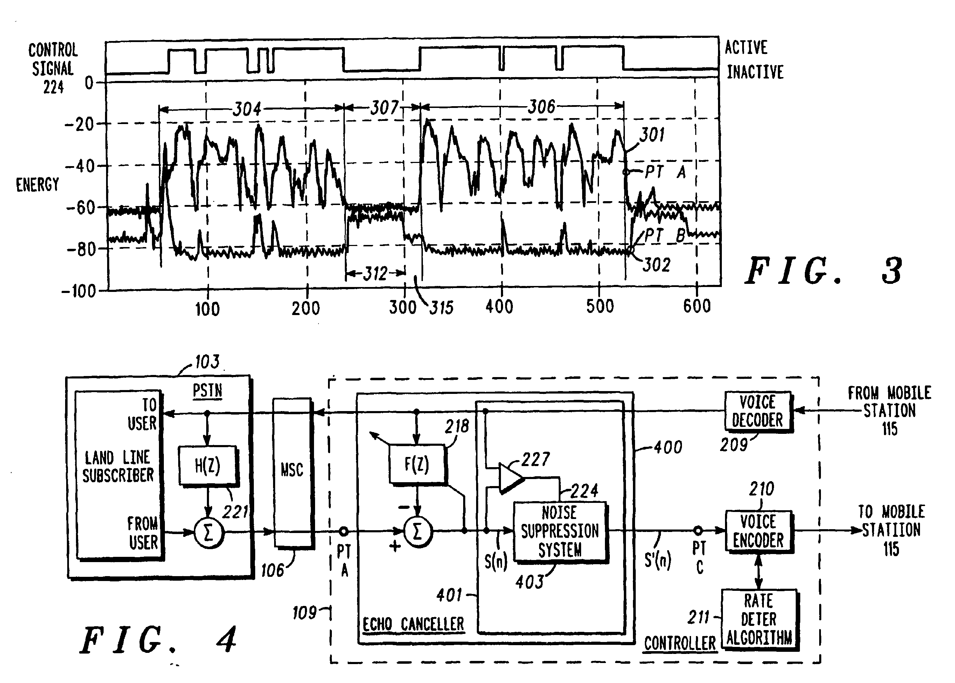

FIG. 3 generally depicts an energy versus time diagram useful in further explaining the prior art configuration of FIG. 2. As shown in FIG. 3, the upper energy plot 301 represents the signal exiting the MSC 106 and entering the echo canceler 203, labeled in FIG. 2 as point A (pt. A). This signal is comprised of an echo generated through H(z) 221 and acoustic noise from the landline subscriber within the PSTN 103. The lower energy plot 302 is the signal exiting the noise suppression system 206 and entering the voice encoder 210, shown as point B in FIG. 2. During intervals 304 and 306 of FIG. 3, the energy level of plot 301 is high indicating that the user of the mobile station 115 is speaking during these time periods. During time period 307, the user of the mobile station 115 is silent, thus the energy exiting the voice decoder 209 during this time period is low.

Referring to plot 302 of FIG. 3, during time intervals 304 and 306 the difference at the input of the comparitor 227 is large, the control signal 224 is active such that the comfort noise source 214 is used as an input to the noise suppression system 206. During time interval 307 when the difference at the input of the comparator 227 is small, the control signal 224 allows the input to the noise suppression system 206 to be from the user of the landline at the PSTN 103. The input from the comfort noise source 214 typically has a lower energy level than the noise input from the landline subscriber user of the PSTN 103, and this is shown as interval 312 in the energy plot 302. Since the energy during time interval 312 (caused by an input from the landline 214) is larger than the energy during time interval 304, the noise suppression system 206 assumes that speech is present at its input, and thus de-activates the noise suppression system 206 until recovery at time interval 315. Essentially, the noise suppression system 206 attenuates the landline noise source level by 13 dB during the time period 315. During time period 306, when speech is again present at the output of the voice decoder 209, the difference at the input of the comparator 227 is again large, the control signal 224 is active such that the comfort noise source 214 is again used as an input to the noise suppression system 206. Important to note is that the energy plot 302 is at the input of the voice encoder 210, thus all of the energy level variations depicted in the energy plot 302 are encoded by the voice encoder 210 and are thus presentable to the user of the mobile station 115 during a communication with a landline user of the PSTN 103.

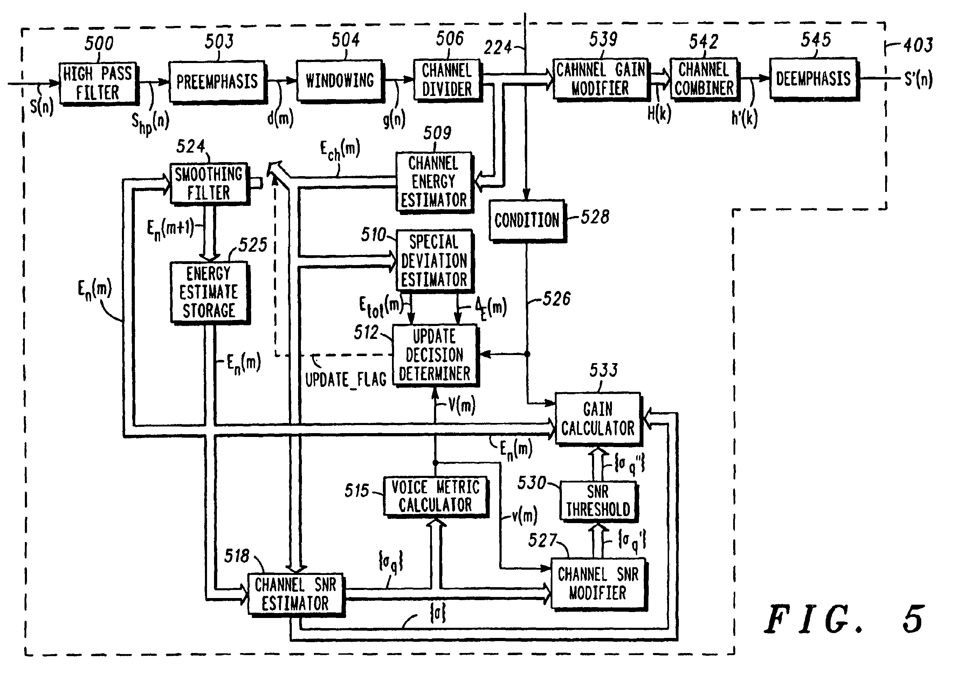

FIG. 4 generally depicts improved non-linear processing for use in a communication system in accordance with the invention. As shown in FIG. 4, the comfort noise source 214 of FIG. 2 has been eliminated and the control signal 224 exiting the comparitor 227 is directly input into the noise suppression system 403. The apparatus 401, in the preferred embodiment in accordance with the invention, comprises the comparitor 227 and the noise suppression system 403. This allows the non-linear process of the apparatus 401, which in this embodiment is the non-linear process, to be functionally provided by the noise suppression system 403. The noise suppression system 403 uses the control signal 224 to inhibit the iterative update of the background noise estimate when the control signal 224 is active as will be described in greater detail with reference to FIG. 5. This prevents any residual echo from biasing the noise estimate provided by the noise suppression system 403. Finally, the control signal 224 is used by a gain calculator within the noise suppression system 403 to attenuate each frequency band to the maximum allowable amount plus the current residual channel signal-to-noise ratio (SNR). In this embodiment, the noise suppression system 403, which provides a means for modeling background noise of a user based on the control signal, models the background noise of a user of the PSTN.

More specifically, when the control signal 224 is active, the channel gains are altered such that the residual echo signal is shaped to be spectrally equivalent to the noise estimate, and then attenuated by a predetermined amount. Important to note is that no noise synthesis (as compared to the prior art of FIG. 2 where the comfort noise source 214 is utilized) is involved, but rather the residual echo signal is adaptively filtered to sound undetectable close to the normal noise suppressed background noise. Since this improved non-linear processing apparatus has an accurate power spectral density, other aspects of the communication system, such as rate determination or voice activity detection within the communication system are likewise improved.

FIG. 5 generally depicts a block diagram of the noise suppression system 403 in accordance with the invention. In the preferred embodiment, the noise suppression system 403 is a modified version of the above-mentioned noise suppression system described in § 4.1.2 of TIA document IS-127. It is noted that several blocks depicted in FIG. 5 of the present application have similar operation as corresponding blocks depicted in FIG.1 of US Pat. No. 4,811,404 to Vilmur.

To begin noise suppression, the input signal $s(n)$ is high pass filtered by high pass filter (HPF) 500 to produce the signal $s_{hp}(n)$. The HPF 500 is a fourth order Chebyshev type II with a cutoff frequency of 120 Hz which is well known in the art. The transfer function of the HPF 500 is defined as:

$$H_{hp}(z) = \frac{\sum_{i=0}^{4} b(i)z^{-i}}{\sum_{i=0}^{4} a(i)z^{-i}},$$

where the respective numerator and denominator coefficients are defined to be:

$$\mathbf{b} = \{\ 0.898025036,\ -3.59010601,\ 5.38416243,\ -3.59010601,\ 0.898024917\ \},$$

$$\mathbf{a} = \{\ 1.0,\ -3.78284979,\ 5.37379122,\ -3.39733505,\ 0.806448996\ \}.$$

As one of ordinary skill in the art will appreciate, any number of high pass filter configurations may be employed.

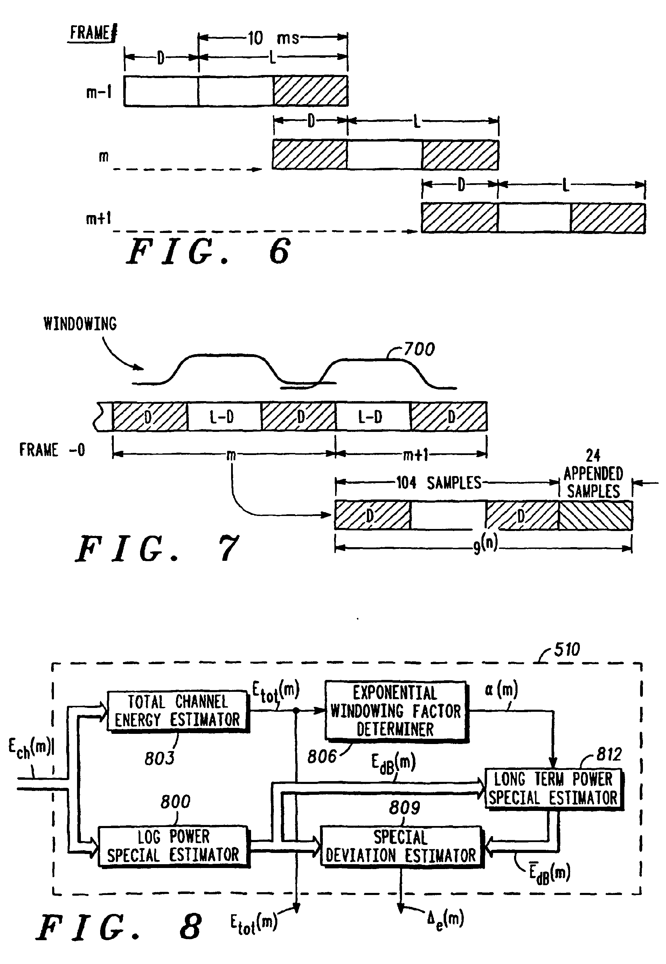

Next, in the preemphasis block 503, the signal $s_{hp}(n)$ is windowed using a smoothed trapezoid window, in which the first $D$ samples $d(m)$ of the input frame (frame "m") are overlapped from the last $D$ samples of the previous frame (frame "m-1"). This overlap is best seen in FIG. 6. Unless otherwise noted, all variables have initial values of zero, e.g., $d(m) = 0$ ; $m \leq 0$. This can be described as:

$$d(m,n) = d(m-1, L+n); \quad 0 \leq n < D,$$

where $m$ is the current frame, $n$ is a sample index to the buffer $\{d(m)\}$, $L = 80$ is the frame length, and $D = 24$ is the overlap (or delay) in samples. The remaining samples of the input buffer are then preemphasized according to the following:

$$d(m, D+n) = s_{hp}(n) + \zeta_p s_{hp}(n-1); \quad 0 \leq n < L,$$

where $\zeta_p = -0.8$ is the preemphasis factor. This results in the input buffer containing $L + D = 104$ samples in which the first $D$ samples are the preemphasized overlap from the previous frame, and the following $L$ samples are input from the current frame.

Next, in the windowing block 504 of FIG. 5, a smoothed trapezoid window (as best illustrated by window 700 of FIG. 7) is applied to the samples to form a Discrete Fourier Transform (DFT) input signal $g(n)$. In the preferred embodiment, $g(n)$ is defined as:

$$g(n) = \begin{cases} d(m,n)\sin^2\left(\pi(n+0.5)/2D\right) & ; 0 \leq n < D, \\ d(m,n) & ; D \leq n < L, \\ d(m,n)\sin^2\left(\pi(n-L+D+0.5)/2D\right) & ; L \leq n < D+L, \\ 0 & ; D+L \leq n < M, \end{cases}$$

where $M = 128$ is the DFT sequence length and all other terms are previously defined.

In the channel divider 506 of FIG. 5, the transformation of $g(n)$ to the frequency domain is performed using the Discrete Fourier Transform (DFT) defined as:

$$G(k) = \frac{2}{M}\sum_{n=0}^{M-1} g(n)e^{-j2\pi nk/M}; \quad 0 \leq k < M,$$

where $e^{j\omega}$ is a unit amplitude complex phasor with instantaneous radial position $\omega$. This is an atypical definition, but one that exploits the efficiencies of the complex Fast Fourier Transform (FFT). The $2/M$ scale factor results from preconditioning the M point real sequence to form an $M/2$ point complex sequence that is transformed using an $M/2$ point complex FFT. In the preferred embodiment, the signal G(k) comprises 65 unique channels. Details on this technique can be found in Proakis and Manolakis, *Introduction to Digital Signal Processing,* 2nd Edition, New York, Macmillan, 1988, pp. 721-722.

The signal G(k) is then input to the channel energy estimator 509 where the channel energy estimate $E_{ch}(m)$ for the current frame, $m$, is determined using the following:

$$E_{ch}(m,i) = \max\left\{ E_{min}, \alpha_{ch}(m)E_{ch}(m-1,i) + (1-\alpha_{ch}(m))\frac{1}{f_H(i)-f_L(i)+1}\sum_{k=f_L(i)}^{f_H(i)}|G(k)|^2 \right\}$$

$$; \quad 0 \leq i < N_c,$$

where $E_{min}$ = 0.0625 is the minimum allowable channel energy, $\alpha_{ck}(m)$ is the channel energy smoothing factor (defined below), $N_c$ = 16 is the number of combined channels, and $f_L(i)$ and $f_H(i)$ are the $i$-th elements of the respective low and high channel combining tables, $f_L$ and $f_H$. In the preferred embodiment, $f_L$ and $f_H$ are defined as:

$$f_L = \{2, 4, 6, 8, 10, 12, 14, 17, 20, 23, 27, 31, 36, 42, 49, 56\},$$

$$f_H = \{3, 5, 7, 9, 11, 13, 16, 19, 22, 26, 30, 35, 41, 48, 55, 63\}.$$

The channel energy smoothing factor, $\alpha_{th}(m)$, can be defined as:

$$\alpha_{ch}(m) = \begin{cases} 0 & ; m \le 1, \\ 0.45 & ; m > 1. \end{cases}$$

which means that $\alpha_{ch}(m)$ assumes a value of zero for the first frame ($m$ = 1) and a value of 0.45 for all subsequent frames. This allows the channel energy estimate to be initialized to the unfiltered channel energy of the first frame. In addition, the channel noise energy estimate (as defined below) should be initialized to the channel energy of the first frame, i.e.:

$$E_n(m, i) = \max\{E_{init}, E_{ch}(m, i)\} \quad ; m = 1, 0 \le i < N_c,$$

where $E_{init}$ = 16 is the minimum allowable channel noise initialization energy.

The channel energy estimate $E_{ch}(m)$ for the current frame is next used to estimate the quantized channel signal-to-noise ratio (SNR) indices. This estimate is performed in the channel SNR estimator 518 of FIG. 5, and is determined as:

$$\sigma_q(i) = \max\left\{0, \min\left\{89, \text{round}\left\{10\log_{10}\left(\frac{E_{ch}(m,i)}{E_n(m,i)}\right) / 0.375\right\}\right\}\right\};$$

$$0 \le i < N_c,$$

where $E_n(m)$ is the current channel noise energy estimate (as defined later), and the values of $\{\sigma_q\}$ are constrained to be between 0 and 89, inclusive. In the present invention, the unquantized raw SNR's $\{\sigma\}$ are required, thus the above equation can be broken up into two steps:

$$\sigma(i) = 10\log_{10}\left(\frac{E_{ch}(m,i)}{E_n(m,i)}\right), \qquad 0 \le i < N_c$$

and

$$\sigma_q(i) = \max\{0, \min\{89, \text{round}\{\sigma(i) / 0.375\}\}\}, \qquad 0 \le i < N_c$$

The parameters $\{\sigma\}$ and $\{\sigma_q\}$ are each shown exiting the channel SNR estimator 518 of FIG. 5.

Using the channel SNR estimate $\{\sigma_q\}$, the sum of the voice metrics is determined in the voice metric calculator 515 using:

$$v(m) = \sum_{i=0}^{N_c-1} V\left(\sigma_q(i)\right)$$

where $V(k)$ is the $k^{th}$ value of the 90 element voice metric table V, which is defined as:

$$V = \{\, 2, 2, 2, 2, 2, 2, 2, 2, 2, 2, 2, 3, 3, 3, 3, 3, 4, 4, 4, 5, 5, 5, 6, 6, 7, 7, 7, 8,$$
$$8, 9, 9, 10, 10, 11, 12, 12, 13, 13, 14, 15, 15, 16, 17, 17, 18, 19, 20, 20, 21,$$
$$22, 23, 24, 24, 25, 26, 27, 28, 28, 29, 30, 31, 32, 33, 34, 35, 36, 37, 37, 38,$$
$$39, 40, 41, 42, 43, 44, 45, 46, 47, 48, 49, 50, 50, 50, 50, 50, 50, 50, 50, 50,$$
$$50\,\}.$$

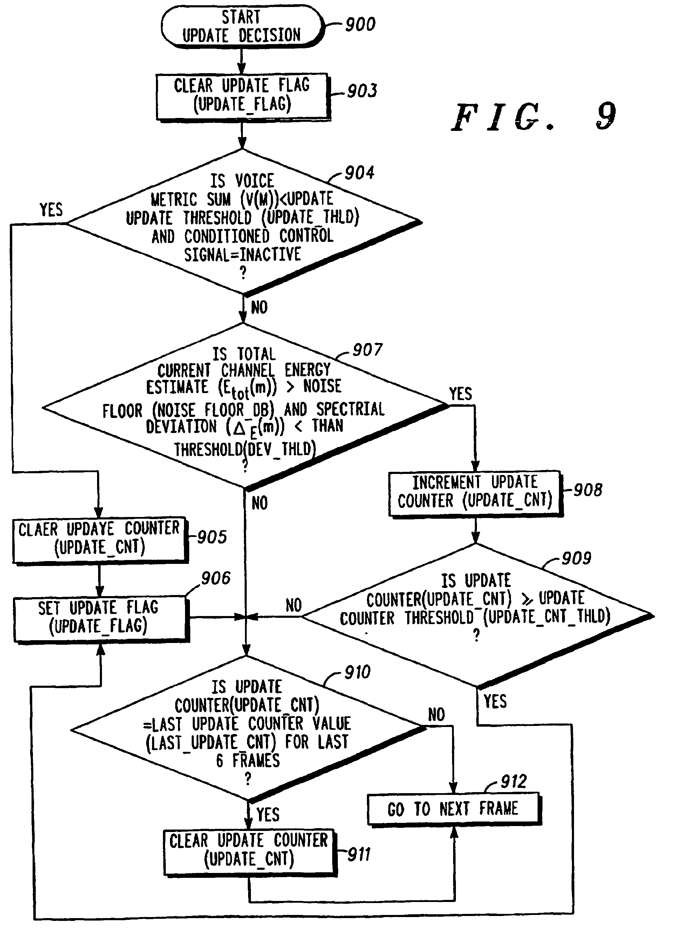

The channel energy estimate $E_{ch}(m)$ for the current frame is also used as input to the spectral deviation estimator 510, which estimates the spectral deviation $\Delta_E(m)$. With reference to FIG. 8, the channel energy estimate $E_{ch}(m)$ is input into a log power spectral estimator 800, where the log power spectra is estimated as:

$$E_{dB}(m, i) = 10 \log_{10}\left(E_{ch}(m, i)\right) ; \qquad 0 \le i < N_c .$$

The channel energy estimate $E_{ch}(m)$ for the current frame is also input into a total channel energy estimator 803, to determine the total channel energy estimate, $E_{tot}(m)$, for the current frame, $m$, according to the following:

$$E_{tot}(m) = 10 \log_{10}\left( \sum_{i=0}^{N_c-1} E_{ch}(m, i) \right).$$

Next, an exponential windowing factor, $\alpha(m)$ (as a function of total channel energy $E_{tot}(m)$) is determined in the exponential windowing factor determiner 806 using:

$$\alpha(m) = \alpha_H - \left( \frac{\alpha_H - \alpha_L}{E_H - E_L} \right)(E_H - E_{tot}(m)),$$

which is limited between $\alpha_H$ and $\alpha_L$ by:

$$\alpha(m) = \max\left\{\alpha_L, \min\left\{\alpha_H, \alpha(m)\right\}\right\},$$

where $E_H$ and $E_L$ are the energy endpoints (in decibels, or "dB") for the linear interpolation of $E_{tot}(m)$, that is transformed to $\alpha(m)$ which has the limits $\alpha_L \le \alpha(m) \le \alpha_H$. The values of these constants are defined as: $E_H = 50$, $E_L = 30$, $\alpha_H = 0.99$, $\alpha_L = 0.50$. Given this, a signal with relative energy of, say, 40 dB would use an exponential windowing factor of $\alpha(m) = 0.745$ using the above calculation.

The spectral deviation $\Delta_E(m)$ is then estimated in the spectral deviation estimator 809. The spectral deviation $\Delta_E(m)$ is the difference between the current power spectrum and an averaged long-term power spectral estimate:

$$\Delta_E(m) = \sum_{i=0}^{N_c-1} \left| E_{dB}(m,i) - \overline{E}_{dB}(m,i) \right| ,$$

where $\overline{E}_{dB}(m)$ is the averaged long-term power spectral estimate, which is determined in the long-term spectral energy estimator 812 using:

$$\overline{E}_{dB}(m+1,i) = \alpha(m)\overline{E}_{dB}(m,i) + (1 - \alpha(m))E_{dB}(m,i) ; \quad 0 \le i < N_c,$$

where all the variables are previously defined. The initial value of $\overline{E}_{dB}(m)$ is defined to be the estimated log power spectra of frame 1, or:

$$\overline{E}_{dB}(m) = E_{dB}(m) \quad ; m = 1 .$$

Next, the control signal 224 is processed by the condition block 528 to generate the conditioned control signal 526. This conditioning is necessary to adapt the sampling rate of the control signal 224 to the block sampling rate of the noise suppression system 403. The psuedo code implemented in the conditioning block 528 is shown below.

```
conditioned_control_signal = ACTIVE
for i = 0 to L-1
        if control_signal(i) == INACTIVE
                conditioned_control_signal = INACTIVE
                break;
        end
end
```

This insures that if the control signal 224 is inactive for a sample $i$, then the conditioned control signal 526 is inactive for the entire block of L samples.

At this point, the sum of the voice metrics $v(m)$, the total channel energy estimate for the current frame $E_{tot}(m)$ and the spectral deviation $\Delta_E(m)$ are input into the update decision determiner 512 to facilitate non-linear processing in accordance with the invention, as is the conditioned control signal 526. The conditioned control signal 526 is used by the update decision determiner 512 to inhibit the update flag *(update_flag)* to prevent an estimate/update of the background noise. The decision logic, shown below in pseudo-code and depicted in flow diagram form in FIG. 9, demonstrates how the noise estimate update decision is ultimately made. The process starts at step 900 and proceeds to step 903, where the update flag (*update_flag*) is cleared. Then, at step 904, the update logic (VMSUM only) of Vilmur is implemented by checking whether the sum of the voice metrics $v(m)$ is less than an update threshold (UPDATE_THLD). If the sum of the voice metric is less than the update threshold, the update counter (*update_cnt*) is cleared at step 905, and the update flag is set at step 906. The pseudo-code for steps 903-906 is shown below:

```
update_flag = FALSE;
if (v(m) ≤ UPDATE_THLD) and
                    conditioned control signal 526=INACTIVE {
      update_flag = TRUE
      update_cnt = 0




                          }
```

If the sum of the voice metric is greater than the update threshold at step 904, noise suppression is implemented. First, at step 907, the total channel energy estimate, $E_{tot}(m)$, for the current frame, $m$, is compared with the noise floor in dB (NOISE_FLOOR_DB) while the spectral deviation $\Delta_E(m)$ is compared with the deviation threshold (DEV_THLD). If the total channel energy estimate is greater than the noise floor and the spectral deviation is less than the deviation threshold, the update counter is incremented at step 908. After the update counter has been incremented, a test is performed at step 909 to determine whether the update counter is greater than or equal to an update counter threshold (UPDATE_CNT_THLD). If the result of the test at step 909 is true, then the update flag is set at step 906. The pseudo-code for steps 907-909 and 906 is shown below:

```
else if (( E_tot(m) > NOISE_FLOOR_DB ) and ( Δ_t(m) < DEV_THLD ))
      {
            update_cnt = update_cnt + 1
            if ( update_cnt ≥ UPDATE_CNT_THLD )
                  update_flag = TRUE
      }
```

As can be seen from FIG. 9, if either of the tests at steps 907 and 909 are false, or after the update flag has been set at step 906, logic to prevent long-term "creeping" of the update counter is implemented. This hysteresis logic is implemented to prevent minimal spectral deviations from accumulating over long periods, causing an invalid forced update. The process starts at step 910 where a test is performed to determine whether the update counter has been equal to the last update counter value (last_update_cnt) for the last N frames (HYSTER_CNT_THLD). In the preferred embodiment, six frames are used as a threshold, but any number of frames may be implemented. If the test at step 910 is true, the update counter is cleared at step 911, and the process exits to the next frame at step 912. If the test at step 910 is false, the process exits directly to the next frame at step 912. The pseudo-code for steps 910-912 is shown below:

```
if ( update_cnt == last_update_cnt )
      hyster_cnt = hyster_cnt + 1
else
      hyster_cnt = 0
last_update_cnt = update_cnt
if ( hyster_cnt > HYSTER_CNT_THLD )
      update_cnt = 0.
```

In the preferred embodiment, the values of the previously used constants are as follows:

UPDATE_THLD = 35,
NOISE_FLOOR_DB = $10\log_{10}(1)$,
DEV_THLD = 28,
UPDATE_CNT_THLD = 50, and
HY5TER_CNT_THLD = 6.

Whenever the update flag at step 906 is set for a given frame, the channel noise estimate for the next frame is updated. The channel noise estimate is updated in the smoothing filter 524 using:

$$E_n(m+1,i) = \max\left\{E_{\min}, \alpha_n E_n(m,i) + (1 - \alpha_n) E_{ch}(m,i)\right\}; \quad 0 \le i < N_c,$$

where $E_{\min}$ = 0.0625 is the minimum allowable channel energy, and $\alpha_n$ = 0.9 is the channel noise smoothing factor stored locally in the smoothing filter 524. The updated channel noise estimate is stored in the energy estimate storage 525, and the output of the energy estimate storage 525 is the updated channel noise estimate $E_n(m)$. The updated channel noise estimate $E_n(m)$ is used as an input to the channel SNR estimator 518 as described above, and also the gain calculator 533 as will be described below.

Next, the noise suppression system 403 determines whether a channel SNR modification should take place. This determination is performed in the channel SNR modifier 527, which counts the number of channels which have channel SNR index values which exceed an index threshold. During the modification process itself, channel SNR modifier 527 reduces the SNR of those particular channels having an SNR index less than a setback threshold (SETBACK_THLD), or reduces the SNR of all of the channels if the sum of the voice metric is less than a metric threshold (METRIC_THLD). A pseudo-code representation of the channel SNR modification process occurring in the channel SNR modifier 527 is provided below:

```
        index_cnt = 0
for ( i = N_M to N_c - 1 step 1 ) {
        if ( σ_q(i) ≥ INDEX_THLD )
                index_cnt = index_cnt + 1
}
if ( index_cnt < INDEX_CNT_THLD )
        modify_flag = TRUE
else
        modify_flag = FALSE


if ( modify_flag == TRUE )
        for ( i = 0 to N_c - 1 step 1 )
                if (( v(m) ≤ METRIC_THLD ) or ( σ_q(i) ≤ SETBACK_THLD
))
                        σ'_q(i) = 1
                else
                        σ'_q(i) = σ_q(i)
else
```

$$\{\sigma'_q\} = \{\sigma_q\}$$

At this point, the channel SNR indices $\{\sigma_q'\}$ are limited to a SNR threshold in the SNR threshold block 530. The constant $\sigma_{th}$ is stored locally in the SNR threshold block 530. A pseudo-code representation of the process performed in the SNR threshold block 530 is provided below:

$$\textbf{for } ( \; i = 0 \text{ to } N_c - 1 \text{ step } 1 \; )$$
$$\textbf{if } ( \sigma'_q(i) < \sigma_{th} )$$
$$\sigma''_q(i) = \sigma_{th}$$
$$\textbf{else}$$
$$\sigma''_q(i) = \sigma'_q(i)$$

In the preferred embodiment, the previous constants and thresholds are given to be:

$N_M = 5$,
INDEX_THLD = 12,
INDEX_CNT_THLD = 5,
METRIC_THLD = 45,
SETBACK_THLD = 12, and
$\sigma_{th} = 6$.

At this point, the limited SNR indices $\{\sigma_q''\}$ and the unquantized channel SNRs $\{\sigma\}$ from the channel SNR estimator 518 are input into the gain calculator 533, where the channel gains are determined. First, the overall gain factor is determined using:

$$\gamma_n = \max \left\{ \gamma_{min}, \; -10 \log_{10} \left( \frac{1}{E_{floor}} \sum_{i=0}^{N_c-1} E_n(m,i) \right) \right\},$$

where $\gamma_{min} = -13$ is the minimum overall gain, $E_{floor} = 1$ is the noise floor energy, and $E_n(m)$ is the estimated noise spectrum calculated during the previous frame. In the preferred embodiment, the constants $\gamma_{min}$ and $E_{floor}$ are stored locally in the gain calculator 533. The decision to use either $\{\sigma_q''\}$ or $\{\sigma\}$ is made within the gain calculator 533 based on the status of the conditioned control signal 526 which is also input to the gain calculator 533. The channel gains (in dB) are then determined using:

$$\gamma_{dB}(i) = \gamma_n - \sigma(i), \quad 0 \le i < N_c$$

when the conditioned control signal 526 is active, or

$$\gamma_{dB}(i) = \mu_g (\sigma''_q(i) - \sigma_{th}) + \gamma_n, \quad 0 \le i < N_c$$

when the conditioned control signal 526 is inactive. The variable $\mu_g = 0.39$ is the gain slope (also stored locally in gain calculator 533). The linear channel gains are then converted using:

$$\gamma_{ch}(i) = \min\{1, 10^{\gamma_{ae}(i)/20}\}, \quad 0 \le i < N_c$$

At this point, the channel gains determined above are applied to the transformed input signal $G(k)$ with the following criteria to produce the output signal $H(k)$ from the channel gain modifier 539:

$$H(k) = \begin{cases} \gamma_{ch}(i)G(k) & : f_L(i) \le k \le f_H(i), 0 \le i < N_c, \\ G(k) & : otherwise. \end{cases}$$

The *otherwise* condition in the above equation assumes the interval of k to be $0 \le k \le M/2$. It is further assumed that $H(k)$ is even symmetric, so that the following condition is also imposed:

$$H(M-k) = H^*(k); \quad 0 < k < M/2,$$

where the * denotes complex conjugate. The signal $H(k)$ is then converted (back) to the time domain in the channel combiner 542 by using the inverse DFT:

$$h(m,n) = \frac{1}{2} \sum_{k=0}^{M-1} H(k)e^{j2\pi nk/M}; \quad 0 \le n < M,$$

and the frequency domain filtering process is completed to produce the output signal $h'(n)$ by applying overlap-and-add with the following criteria:

$$h'(n) = \begin{cases} h(m,n) + h(m-1,n+L) & : 0 \le n < M-L, \\ h(m,n) & : M-L \le n < L. \end{cases}$$

Signal deemphasis is applied to the signal $h'(n)$ by the deemphasis block 545 to produce the signal s'(n) having been noised suppressed in accordance with the invention:

$$s'(n) = h'(n) + \zeta_d s'(n-1); \quad 0 \le n < L,$$

where $\zeta_d = 0.8$ is a deemphasis factor stored locally within the deemphasis block 545.

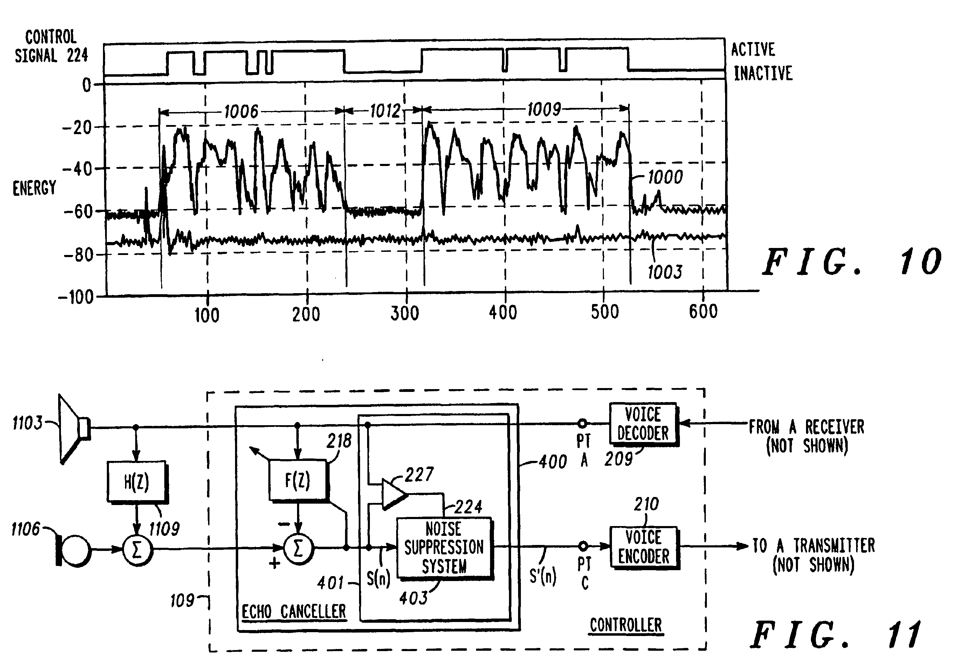

FIG. 10. generally depicts a resulting energy versus time diagram which results from implementing improved non-linear processing in accordance with the invention. Referring generally to FIG. 4 and FIG. 10, during the time intervals 1006 and 1009 the difference at the inputs of the comparitor 227 is large, and the control signal 224 entering the noise suppression system 403 is active. During interval 1012, the difference at the inputs of the comparitor 227 entering the noise suppression system 403 is small and the control signal 224 is inactive. However, unlike the signal energy 302 in FIG. 3, the signal energy 1003 of FIG. 10 is constant in accordance with the invention. This is due to the fact that the comfort noise generator 214 shown in the prior art FIG. 2 has been removed and the energy signal 1003 input to the noise suppression system 403 (pt. "C" of FIG. 4) consists of substantially the "same" amount of noise from the PSTN 103. Furthermore, when the control signal 224 entering the noise suppression system 403 is active, the noise suppression system 403 is freed from the burden of discriminating between background noise and speech signals. As such, when the control signal 224 in this embodiment is active, both the noise and signal also entering the noise suppression system 403 (which happens to be the echo residual) are always attenuated. While it is shown that the energy remains constant throughout this period, it should be reiterated that the spectral characteristics are also consistent.

While the invention has been particularly shown and described with reference to a particular embodiment, it will be understood by those skilled in the art that various changes in form and details may be made therein without departing from the scope of the invention. For example, the apparatus 401 in accordance with the invention, shown within the echo canceller 400, could be physically separated from the echo canceller. Additionally, while the apparatus 401 in accordance with the invention has been described as being implemented on the network side of the communication system, the apparatus 401 could equally be implemented in the mobile side of the system. For example, if the apparatus 401 in accordance with the invention is implemented in the mobile station 115, the only changes required to FIG. 4 would be the elimination of the PSTN 103 and the MSC 106, and a change in the model implemented in the transfer function H(z) shown in block 221.

The resulting block diagram of FIG. 11 depicts the apparatus 401 implemented in the mobile station 115 in accordance with the invention. As shown in FIG. 11, signals exiting the echo canceler 400 are provided to a speaker 1103 of the mobile station 115 while signals entering the echo canceller 400 originate from a microphone 1106 of the mobile station 115. The transfer function H(z) within block 1109 is a transfer function based on an acoustical model which better represents the rigorous environment of the mobile station 115. Operation of the apparatus 401, described above as implemented in the network side of the communication system, remains unchanged. In this embodiment, the noise suppression system 403, which provides a means for modeling background noise of a user based on the control signal, models the background noise of a user of the mobile station.

## Claims

1.  An apparatus for non-linear processing in a communication system, the apparatus **characterized by**:

    means adapted to analyze an echo canceler reference signal and an echo canceler residual signal to produce a control signal (224); and
    a noise suppression system (403) comprising means adapted to estimate background noise of a user based on the control signal (224), the noise suppression system further comprising means adapted to inhibit an update of the noise estimate in response to the control signal (224), and means adapted to spectrally shape the echo canceler residual signal, in response to the control signal (224) and the noise estimate, in order to produce a signal that is spectrally equivalent to the noise estimate.

2.  The apparatus of claim 1, wherein the means adapted to estimate background noise of a user is further **characterized by** means adapted to filter the echo canceler residual signal.

3.  The apparatus of claim 1, wherein the means adapted to analyze the echo canceler reference signal and the echo canceler residual signal to produce the control signal is either physically separated from the noise suppression system adapted to estimate background noise or is co-located with the noise suppression system adapted to estimate background noise.

4.  A method of non-linear processing in a communication system, the method **characterized by** the steps of:

    analyzing an echo canceler reference signal and an echo canceler residual signal to produce a control signal (224);
    estimating background noise of a user via a noise suppression system (403) based on the control signal (224) and inhibiting an update of the noise estimate in response to the control signal (224); and
    spectrally shaping, in response to the control signal (224) and the noise estimate, the echo canceler residual signal, in order to produce a signal that is spectrally equivalent to the noise estimate.

## Patentansprüche

1.  Vorrichtung zur nichtlinearen Verarbeitung in einem Kommunikationssystem, wobei die Vorrichtung **gekennzeichnet ist durch**:

    Mittel, die zum Analysieren eines Echokompensatorbezugssignals und eines Echokompensatorrestsignals geeignet sind, um ein Steuersignal (224) zu erzeugen; und
    ein Rauschunterdrückungssystem (403), das Mittel umfasst, die zum Schätzen eines Hintergrundrauschens eines Benutzers basierend auf dem Steuersignal (224) geeignet sind, wobei das Rauschunterdrückungssystem darüber hinaus Mittel, die zum Unterdrücken einer Aktualisierung der Rauschschätzung als Antwort auf das Steuersignal (224) geeignet sind, und Mittel, die zum spektralen Bilden des Echokompensatorrestsignals als Antwort auf das Steuersignal (224) und die Rauschschätzung geeignet sind, umfasst, um ein Signal zu erzeugen, das der Rauschschätzung spektral entspricht.

2. Vorrichtung nach Anspruch 1, wobei die Mittel, die zum Schätzen eines Hintergrundrauschens eines Benutzers geeignet sind, darüber hinaus durch Mittel, die zum Filtern des Echokompensatorrestsignals geeignet sind, gekennzeichnet sind.

3. Vorrichtung nach Anspruch 1, wobei die Mittel, die zum Analysieren des Echokompensatorbezugssignals und des Echokompensatorrestsignals geeignet sind, um das Steuersignal zu erzeugen, entweder physikalisch von dem zum Schätzen eines Hintergrundrauschens geeigneten Rauschunterdrückungssystem getrennt sind oder mit dem zum Schätzen eines Hintergrundrauschens geeigneten Rauschunterdrückungssystem gemeinsam angebracht sind.

4. Verfahren zur nichtlinearen Verarbeitung in einem Kommunikationssystem, wobei das Verfahren durch die Schritte gekennzeichnet ist:

Analysieren eines Echokompensatorbezugssignals und eines Echokompensatorrestsignals, um ein Steuersignal (224) zu erzeugen;
Schätzen eines Hintergrundrauschens eines Benutzers über ein Rauschunterdrückungssystem (403) basierend auf dem Steuersignal (224) und Unterdrücken einer Aktualisierung der Rauschschätzung als Antwort auf das Steuersignal (224); und
spektrales Bilden des Echokompensatorrestsignals als Antwort auf das Steuersignal (224) und die Rauschschätzung, um ein Signal zu erzeugen, das der Rauschschätzung spektral entspricht.

**Revendications**

1. Appareil pour un traitement non linéaire dans un système de communication, l'appareil étant **caractérisé par** :

un moyen adapté pour analyser un signal de référence d'annulation d'écho et un signal résiduel d'annulation d'écho pour produire un signal de commande (224) ; et
un système de suppression de bruit (403) comprenant un moyen adapté pour estimer le bruit de fond d'un utilisateur d'après le signal de commande (224), le système de suppression de bruit comprenant en outre un moyen adapté pour empêcher la mise à jour de l'estimation de bruit en réponse au signal de commande (224) et un moyen adapté pour mettre en forme de manière spectrale le signal résiduel d'annuladon d'écho en réponse au signal de commande (224) et à l'estimation de bruit, afin de produire un signal qui est équivalent de manière spectrale à l'estimation de bruit.

2. Appareil selon la revendication 1, dans lequel le moyen adapté pour estimer le bruit de fond d'un utilisateur est en outre **caractérisé par** un moyen adapté pour filtrer le signal résiduel d'annulation d'écho.

3. Appareil selon la revendication 1, dans lequel le moyen adapté pour analyser le signal de référence d'annulation d'écho et le signal résiduel d'annulation d'écho pour produire le signal de commande est soit séparé physiquement du système de suppression de bruit adapté pour estimer le bruit de fond, soit co-situé avec le système de suppression de bruit adapté pour estimer le bruit de fond.

4. Procédé de traitement non linéaire dans un système de communication, le procédé étant **caractérisé par** les étapes consistant à :

analyser un signal de référence d'annulation d'écho et un signal résiduel d'annulation d'écho pour produire un signal de commande (224) ;
estimer le bruit de fond d'un utilisateur au moyen d'un système de suppression de bruit (403) d'après signal de commande (224) et empêcher la mise à jour de l'estimation de bruit en réponse au signal de commande (224) ; et
mettre en forme de manière spectrale, en réponse au signal de commande (224) et à l'estimation de bruit, le signal résiduel d'annulation d'écho afin de produire un signal qui est équivalent de manière spectrale à l'estimation de bruit.

**FIG. 1**

-PRIOR ART-

**FIG. 2**

EP 0 895 688 B1

FIG. 3

FIG. 4

EP 0 895 688 B1

*FIG. 5*

FRAME#

$$\text{m}-1$$

$$\text{m}$$

$$\text{m}+1$$

## FIG. 6

WINDOWING

700

FRAME -0

$$\text{D} \quad \text{L-D} \quad \text{D} \quad \text{L-D} \quad \text{D}$$

m

m+1

104 SAMPLES

24 APPENDED SAMPLES

D

D

g(n)

## FIG. 7

510

$$E_{ch}(m)|$$

| TOTAL CHANNEL ENERGY ESTIMATOR |
| 803 |

$$E_{tot}(m)$$

| EXPONENTIAL WINDOWING FACTOR DETERMINER |
| 806 |

$$\alpha(m)$$

$$E_{dB}(m)$$

| LONG TERM POWER SPECIAL ESTIMATOR |
| 812 |

800

| LOG POWER SPECIAL ESTIMATOR |

809

| SPECIAL DEVIATION ESTIMATOR |

$$\overline{E}_{dB}(m)$$

## FIG. 8

$$E_{tot}(m)$$

$$\Delta_e(m)$$

EP 0 895 688 B1

FIG. 9

START UPDATE DECISION — 900

CLEAR UPDATE FLAG (UPDATE_FLAG) — 903

IS VOICE METRIC SUM (V(M))<UPDATE UPDATE THRESHOLD (UPDATE_THLD) AND CONDITIONED CONTROL SIGNAL=INACTIVE ? — 904

IS TOTAL CURRENT CHANNEL ENERGY ESTIMATE ($E_{tot}(m)$) > NOISE FLOOR (NOISE_FLOOR_DB) AND SPECTRIAL DEVIATION ($\Delta_E^-(m)$) < THAN THRESHOLD(DEV_THLD) ? — 907

CLAER UPDAYE COUNTER (UPDATE_CNT) — 905

SET UPDATE FLAG (UPDATE_FLAG) — 906

INCREMENT UPDATE COUNTER (UPDATE_CNT) — 908

IS UPDATE COUNTER(UPDATE_CNT) ≫ UPDATE COUNTER THRESHOLD (UPDATE_CNT_THLD) ? — 909

IS UPDATE COUNTER(UPDATE_CNT) =LAST UPDATE COUNTER VALUE (LAST_UPDATE_CNT) FOR LAST 6 FRAMES ? — 910

GO TO NEXT FRAME — 912

CLEAR UPDATE COUNTER (UPDATE_CNT) — 911

20

*FIG. 10*

*FIG. 11*

EP 0 895 688 B1